# EUROPEAN PATENT APPLICATION

(11) **EP 4 276 856 A1**
(43) Date of publication of application: **15.11.2023**
(21) Application number: 22173366.0
(22) Date of filing: 13.05.2022
(51) Int. Cl.: H01F 7/06, H01F 7/08, H01F 7/13, H01F 7/16, E05B 47/00

(54) **SOLENOID ASSEMBLY WITH EXTENDED STROKE LENGTH**

(71) Applicant: Hamilton Sundstrand Corporation, Charlotte, NC 28217 (US)
(72) Inventor: TATE, David J, Hemel Hempstead, HP3 0AU (GB)
(74) Representative: Dehns

(57) **Abstract**

The present disclosure provides a solenoid assembly (10;110;210) that includes a static housing (12;120;220), a plunger (14;114;214) disposed within the housing (12;112;212) and translatable along an actuation axis (A) in response to a magnetic actuation force, an intermediate element (40;140;240) disposed within the housing (12;112;212) and surrounding at least a portion of the plunger (14;114;214) that is also translatable along the actuation axis (A) in response to a magnetic actuation force. A coil arrangement (21;121;221) is disposed within the housing (12;120;220) and provides a first and second magnetic actuation force (M1' M1'; M1"; M2; M2'; M2") in response to electrical excitation thereof. The coil arrangement (21;121;221) is arranged such that the first magnetic actuation force (M1; M1'; M1") is configured to translate the intermediate element (40;140;240) and the plunger (14;114;214) together with respect to the static housing (12;112;212), and the second magnetic actuation force (M2;M2';M2") is configured to translate the plunger (14;114;214) with respect to the intermediate element (40;140;240). This can improve the stroke length of the solenoid assembly (10;110;210).

## Description

### TECHNICAL FIELD

The present disclosure relates to a solenoid assembly. The present disclosure also relates to an aircraft door including the solenoid assembly and a method of operating the solenoid assembly.

### BACKGROUND

A solenoid assembly can be used to provide linear actuation for various applications. Typically, a solenoid includes a coil of wire mounted in or on a housing and a movable plunger disposed within the coil of wire. The moveable plunger comprises, at least in a part thereof, a ferromagnetic material. The plunger may also be called an armature or a slug in certain arrangements. When current is passed through the coil of wire an electromagnetic force is exerted on the plunger to move the plunger within the coil of wire and thereby provide linear actuation. The maximum distance the plunger moves under this force defines the 'stroke length' of the solenoid assembly. The stroke length of current solenoid assemblies can be limited owing to the limited distance over which the electromagnetic force generated by the coil of wire acts on the plunger.

Although current solenoid assemblies can provide a relatively simple and cost effective means of linear actuation, the limited stroke length can limit their use to certain applications. This may mean more expensive and complicated linear actuators, such as a linear motor, may have to used instead of a solenoid assembly in certain applications.

Accordingly, there is a desire to provide a solenoid assembly that provides an increased stroke length such that it can replace more complex and expensive linear actuators in certain applications. There is also a desire that such a solenoid assembly is of a relatively compact and lightweight construction. This may make it more useful in space and weight critical applications (such as in an aircraft, for example, in a door lock on an aircraft).

### SUMMARY

From one aspect, the present disclosure provides a solenoid assembly comprising a static housing, a plunger disposed within the housing, and an intermediate element disposed within the housing and surrounding at least a portion of the plunger. The plunger and the intermediate element are each translatable along the actuation axis in response to a magnetic actuation force. A coil arrangement is disposed within the housing and is configured to provide a first magnetic actuation force in response to electrical excitation thereof and to provide a second magnetic actuation force in response to electrical excitation thereof. The coil arrangement is arranged such that the first magnetic actuation force is configured to translate the intermediate element and the plunger together with respect to the static housing, and such that the second magnetic actuation force is configured to translate the plunger with respect to the intermediate element.

In one embodiment of the above, the coil arrangement comprises a first coil assembly and a second, different coil assembly each disposed within the housing. The first and second coil assembly are configured to provide the first and second magnetic actuation force in response to electrical excitation thereof, respectively.

In a further embodiment of either of the above, the intermediate element includes a first actuation surface opposing a first actuation limiting surface of the housing. A first gap between the first actuation surface and the first actuation limiting surface is reduced or closed in response to the first magnetic actuation force translating the intermediate element.

In a further embodiment of the above, the first actuation and actuation limiting surfaces are angled at an acute angle relative to a radial direction (R) from the actuation axis (A). In one example, the surfaces are at an angle of between 30°-60°. In another example, the surfaces are at an angle of between such as between 40°-50°. In yet another example, the surfaces are at an angle of about 45°.

In a further embodiment of any of the above (where the coil arrangement includes a first and a second, different coil assembly), the first and second coil assemblies are arranged in series axially along the actuation axis. In a further embodiment, the assembly includes a sliding joint between the intermediate element and the plunger. In yet a further embodiment, the plunger includes a second actuation surface opposing a second actuation limiting surface of the housing. A second gap between the second actuation surface and the second actuation limiting surface is reduced or closed in response to the second magnetic actuation force translating the plunger.

In a further embodiment, the first and second coil assemblies are disposed in respective cavities in the housing.

In an alternative further embodiment (where the coil arrangement includes a first and a second, different coil assembly), the first coil assembly and the second coil assembly are arranged concentrically about the actuation axis with the first coil assembly surrounding the second coil assembly.

In a further embodiment of the above, the intermediate element is substantially S-shaped or Z-shaped in cross-section. The cross-section is viewed in the circumferential direction of the intermediate element relative to the actuation axis.

In a further embodiment of either of the above, the second coil assembly is disposed in a cavity in the intermediate element. The first coil assembly is disposed in a separate cavity in the static housing.

In a further embodiment of the above, the plunger includes a second actuation surface opposing a second actuation limiting surface of the intermediate element. A second gap between the second actuation surface and the second actuation limiting surface is reduced or closed in response to the second magnetic actuation force translating the plunger.

In yet a further embodiment of any of the above, the second actuation and actuation limiting surfaces are angled at an acute angle relative to a radial direction (R) from the actuation axis (A). In one example, the surfaces are at an angle of between 30°-60°. In another example, the surfaces are at an angle of between such as between 40°-50°. In yet another example, the surfaces are at an angle of about 45°.

From another aspect, the present disclosure provides an aircraft door comprising a door lock, and the solenoid assembly of the above aspect or any of its embodiments. The solenoid assembly is integrated into the door lock and translation of the plunger is configured to provide selective locking or unlocking of the door lock.

From yet another aspect, the present disclosure relates to a method of operating the solenoid assembly of the above aspect or any of its embodiments when the coil arrangement includes a first and second coil assembly. The method comprising electrically energising the first and second coil assemblies either simultaneously or at separate times to each other.

### BRIEF DESCRIPTION OF DRAWINGS

Various embodiments of this disclosure will now be described by way of example only, with reference to the accompanying drawings in which:
Figure 1 shows a door of an aircraft, including a door lock actuated by a solenoid assembly in accordance with an embodiment of the present disclosure;
Figure 2 shows a solenoid assembly of the present disclosure in accordance with a first embodiment of the present disclosure;
Figure 3 shows another solenoid assembly of the present disclosure in accordance with a second embodiment of the present disclosure; and
Figure 4 shows yet another solenoid assembly of the present disclosure in accordance with a third embodiment of the present disclosure.

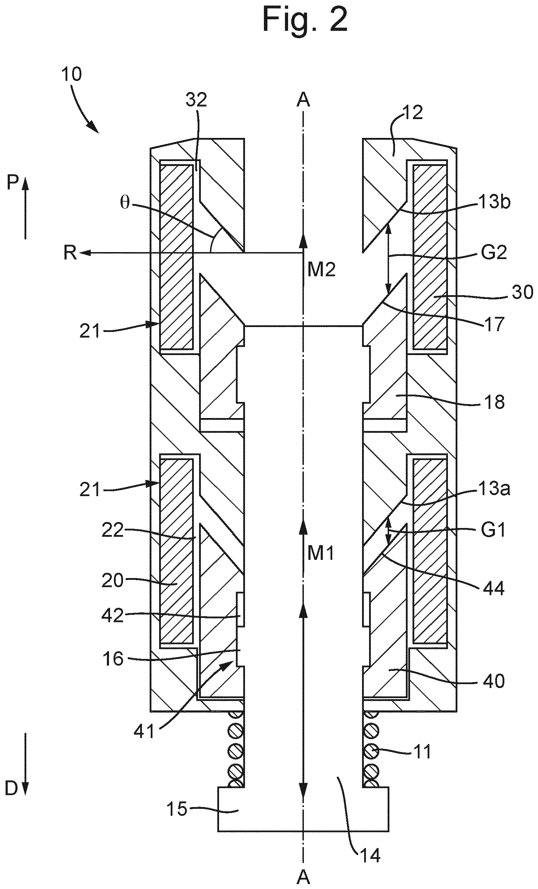

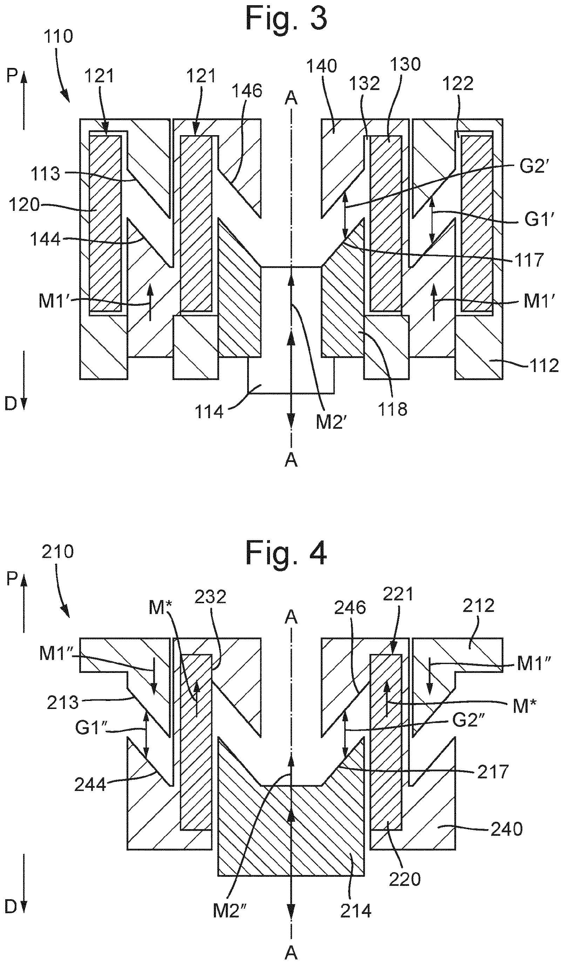

Alike or corresponding elements of each figure are given the same reference numeral but with the addition of 100 to the previous figure or one or more dashes as appropriate. For example, the solenoid assembly 10 of Fig. 2 corresponds to the solenoid assembly 110 of Fig. 3 and the solenoid assembly 210 of Fig. 4, and the first magnetic air gap G1 of Fig. 2 corresponds to the first magnetic air gap G1' of Fig. 3 and the first magnetic air gap G1" of Fig. 4.

### DETAILED DESCRIPTION OF DRAWINGS

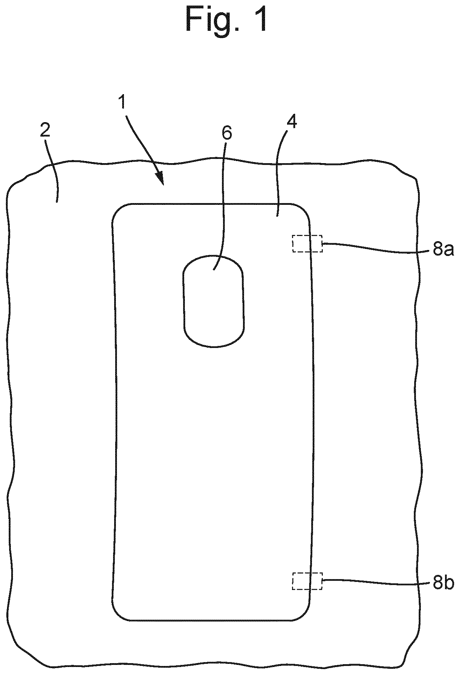

With reference to Fig. 1, there is illustrated a portion of an aircraft 1 including an aircraft fuselage wall 2 defining a cabin of the aircraft 1 and an aircraft door 4 mounted in the fuselage wall 2. The aircraft door 4 is openable and closable to selectively allow access to the interior of the fuselage wall 2 and thus the cabin.

It is to be appreciated that the aircraft door 4 may alternatively be configured for selectively allowing access to an aircraft cockpit or a hold of the aircraft.

The aircraft door 4 includes one or more door locks 8a, 8b. The door locks 8a, 8b are configured to selectively allow or prevent opening of the aircraft door 4.

The door locks 8a, 8b operate by actuating a plunger of a solenoid assembly (described in more detail below with reference to Fig. 2-4) to selectively extend into or be retracted from a recess (not shown). When the plunger extends into the recess, the door lock 8a, 8b prohibits opening of the aircraft door 4, and when the plunger is retracted from the recess the aircraft door 4 may be opened. The solenoid assembly may be mounted in the fuselage wall 2 and the recess in the aircraft door 4, or the solenoid assembly may be mounted in the door 4 and the recess in the fuselage wall 2.

The aircraft door 4 may include further ancillary features, which are not described in detail herein. For example, the aircraft door 4 may include a window 6 and/or a mechanical override system to be used in the event of the door locks 8a, 8b being stuck in a locked state. The door 4 may also include hinges and a handle (not shown) to aid e.g., mounting and opening of the door 4.

Although the present disclosure details the use of the solenoid assembly 10 in such an aircraft application, it should be understood that within the scope of the present disclosure the embodiments of the solenoid assembly 10 can be used in any other application where an increased stroke length of linear actuation whilst minimising additional complexity may be desirable. This may include other aircraft applications, such as the actuation of control surfaces, as well as actuation of components in any other engineering or industrial application.

With reference to Fig. 2, a solenoid assembly 10 in accordance with an embodiment of the invention is shown. As discussed below, the solenoid assembly 10 is in a 'series-type' arrangement.

The solenoid assembly 10 includes a static housing 12. The static housing 12 is arranged about a longitudinal actuation axis A. The static housing 12 may be made of a ferrous material, for example, a silicon-iron alloy, cobalt-iron alloy, or iron alloy. The ferrous material may be formed in a laminated structure.

The solenoid assembly 10 also includes a plunger 14, which is in the form of an elongate member (and may also be called an armature or a slug). The illustrated plunger 14 is centred on the actuation axis A and is translatable back and forth along the actuation axis A in a proximal direction P and an opposing distal direction D with respect to the static housing 12. The plunger 14 includes a ferromagnetic part 18 at a proximal and radially outer extent of the plunger 14. The ferromagnetic part 18 may be integrally formed with the rest of the plunger 14 or may be an additional part bonded thereto. The ferromagnetic part 18 is made of a ferrous material, for example, a silicon-iron alloy, cobalt-iron alloy, or iron alloy. The ferrous material may be formed in a laminated structure. The rest of the plunger 14 may or may not be made of a similar ferrous material.

The solenoid assembly 10 includes an intermediate element 40 (or intermediate member 40) disposed within the static housing 12 and translatable along the actuator axis A in the proximal and distal directions P, D. The intermediate element 40 is magnetic, either fully or in part (i.e., includes parts which are magnetic), such that it is translatable under the influence of an electromagnetic force. The intermediate element 40 is mounted on a sliding joint 41 to the plunger 14 such that the intermediate element 40 can exert a force on the plunger 14 to move the plunger 14 together with the intermediate element 40. The sliding joint 41 may take any appropriate form of sliding joint; however, the sliding joint 41 as illustrated includes a lug 16 extending from the plunger 14 to form an annular collar around the plunger 14, which is received in an annular recess 42 (or groove) defined in the intermediate element 14. The axial length of the lug 16 is smaller than the axial length of the recess 42 such that the lug 16 can slide axially proximally and distally within the recess 42. When the lug 16 is in contact with either end of the recess 42, axial forces may be transmitted from the intermediate element 40 to the plunger 14 and *vice versa.*

The solenoid assembly 10 includes a coil arrangement 21. In this embodiment, the coil arrangement 21 includes a first coil assembly 20 and a second coil assembly 30, which are stacked axially in series on top of each other. The first coil assembly 20 and second coil assembly 30 have the same diameter and are arranged with the first coil assembly 20 spaced distally from the second coil assembly 30. The first coil assembly 20 is disposed in a first cavity 22 in the static housing 12 and the second soil assembly 30 is disposed in a second cavity 32 in the static housing 12.

The illustrated plunger 14 includes a flange 15 (or a seat) at a distal end thereof. A resilient member 11, such as a spring, may be provided between the flange 15 and a distal end of the static housing 12 and may be configured to bias the plunger 14 in a distal direction away from the static housing 12. When the solenoid assembly 10 is energised by a current being provided to the first and/or second coil assemblies 20, 30, the spring force provided by the resilient member 11 is overcome to move the plunger 14 in the proximal direction. When the solenoid is un-energised, the spring force returns the plunger 14 to its original starting position.

While only illustrated in this embodiment, it will be appreciated that such a resilient member 11 may be included with the other embodiments described herein (i.e., in relation to Figs 3 and 4).

In use, the first coil assembly 20 and the second coil assembly 30 can be energised using an electrical current to provide a first magnetic actuation force M1 and a second magnetic actuation force M2, respectively. A current may be applied to both the first and second coil assemblies 20, 30 simultaneously or currents may be applied to the first and second coil assemblies 20, 30 one after the other. If both coil assemblies 20, 30 are energised simultaneously, the whole stroke length of the plunger 14 can be provided by the energisation, whereas separate energisation of the coil assemblies 20, 30 can be used to provide different stages of plunger 14 movement. The size of the current applied to each coil assembly 20, 30 can also be varied to control the degree and speed of plunger 14 movement.

The first magnetic actuation force M1 is provided by a current being applied to the first coil assembly 20, which thereby forms a first magnetic circuit. The first magnetic circuit extends through the first coil assembly 20, parts of the static housing 12 adjacent the first coil assembly 20, the intermediate element 40, and a first magnetic air gap G1. The strength of the first magnetic actuation force M1 is inversely proportional to the square of the size of the first magnetic air gap G1. The first magnetic air gap G1 extends axially between a first actuation surface 44 which is at a proximal end of the intermediate element 40 and a first actuation limiting surface 13a which is a part of the static housing 12 adjacent to, and axially opposing the first actuation surface 44.

The second magnetic actuation force M2 is provided by a current being applied to the second coil assembly 30 which thereby forms a second magnetic circuit. The second magnetic circuit extends through the second coil assembly 30, the ferromagnetic part 18 of the plunger 14, parts of the static housing 12 adjacent the second coil assembly 30, and a second magnetic air gap G2. The strength of the second magnetic actuation force M2 is inversely proportional to the square of the size of the second magnetic air gap G2.

The second magnetic air gap G2 extends axially between a second actuation surface 17 which is at a proximal end of the plunger 14 (and more specifically of the ferromagnetic part 18 of the plunger 14) and a second actuation limiting surface 13b which is a part of the static housing 12 adjacent to, and axially opposing the second actuation surface 17.

As will be appreciated, in a non-energised (or rest) state of the solenoid assembly 10, the plunger 14 and the intermediate element 40 are located in a distal position as illustrated (e.g., owing to the influence of the resilient member 11 when present, and/or under the influence of gravity or another force). When a current is passed through the first coil assembly 20, the first magnetic circuit is formed and provides the first magnetic actuation force M1, which translates the intermediate element 40 in a proximal direction P. The distal end of the recess 42 of the sliding joint 41 engages the distal end of the lug 16 of the sliding joint 41 to cause the plunger 14 to move together with the intermediate element 40 in the proximal direction P. As the intermediate element 40 moves proximally, the first magnetic air gap G1 progressively becomes smaller, such that the magnetic actuation force M1 increases, until the first magnetic air gap G1 is closed and the first actuation surface 44 abuts the first actuation limiting surface 13a.

At the point where the first actuation surface 44 abuts the first actuation limiting surface 13a, a current can then be passed through the second coil assembly 30 to form the second magnetic circuit and provide the second magnetic actuation force M2. In some processes, where the current is passed through each of the first coil assembly 20 and the second coil assembly 30 simultaneously, up until the point at which the first actuation surface 44 abuts the first actuation limiting surface 13a, the second magnetic actuation force M2 provides only a small force as compared to the first magnetic actuation force M1 due to the larger size of the second magnetic air gap G2.

The second magnetic actuation force M2 (once the first actuation surface 44 abuts the first actuation limiting surface 13a) causes further proximal movement of the plunger 14, said further movement including sliding of the lug 16 in the sliding joint 41 such that the plunger 14 moves proximally under the influence of the second magnetic actuation force M2 relative to the static housing 12 and the intermediate element 40.

The plunger moves proximally under the influence of the second magnetic actuation force M2 until the second actuation surface 17 abuts the second actuation limiting surface 13b.

In this way, the overall movement/stroke length of the plunger 14 is made longer than it would be under the influence of only a single coil assembly/magnetic force. This assembly 10 thus provides an increased stroke length without greatly increasing the complexity of the solenoid assembly 10. It can also maintain a high enough strength of magnetic force to perform the increased movement of the plunger 14 without needing to greatly increase the electrical power required to generate the magnetic forces.

When the current is switched off to both the first and second coil assemblies 20, 30, the plunger 14 moves distally to the starting position under the spring force exerted by the resilient member 11.

In the depicted embodiment, each of the first and second actuation surfaces 44, 17 and the first and second actuation limiting surfaces 13a, 13b are angled with respect to a radial direction R extending from the actuation axis A. These surfaces 44, 17, 13a, 13b have an acute angle θ relative to the radial direction R, and in some embodiments the acute angle θ is in the range 30° to 60°, or more narrowly 40° to 50°, or more narrowly still about 45°.

The angling of the surfaces 44, 17, 13a, 13b is an optional feature that can be used to modulate the magnetic force generated across the gaps G1, G2 during translation of the plunger 14 and/or intermediate element 40. It is thought that angling the surfaces 44, 17, 13a, 13b changes the axial component of magnetic force communicated across the gaps G1, G2, which can be used to provide a more linear correlation between the amount of electrical current supplied to the coil assemblies 20, 30 and the resulting axial translation of the plunger 14. As will be appreciated, such a linear response can be particularly desirable in applications where the plunger 14 is needed to be actuated to different intermediate positions within its overall stroke length. Within the example ranges given above, the precise angle of the surfaces 44, 17, 13a, 13b can be adjusted as necessary to provide the appropriate response for a particular application. Of course, the solenoid assembly 10 and its increased stroke length can still be implemented without the acute angling of surfaces 44,17, 13a, 13b. Accordingly, in other embodiments, the surfaces 44, 17, 13a, 13b are not angled as shown, and are instead parallel to the radial direction R.

Fig. 3 illustrates an alternative embodiment of a solenoid assembly 110 in accordance with the present disclosure. Functionally, the solenoid assembly 110 acts in a similar manner to the solenoid assembly 10 of Fig. 2 in that the first coil assembly 120 provides a first magnetic actuation force M1' which translates the intermediate element 140 (together with the plunger 114) in the proximal direction P along the actuation axis A until the first actuation surface 144 abuts the first actuation limiting surface 113. The second coil assembly 130 also provides a second magnetic actuation force M2' which translates the plunger 114 (by interaction with the ferromagnetic part 118 of the plunger 114) in a proximal direction P along the actuation axis A with respect to the intermediate element 140.

The solenoid assembly 110 of Fig. 3 differs from the solenoid assembly 10 of Fig. 2 in that the first coil assembly 120 is disposed concentrically outwards of the second coil assembly 130 and in the resting, or off state, they share the same axial position. In this manner, the solenoid assembly 110 can be known as a 'nested-type' arrangement. The first coil assembly 120 is still housed within a cavity 122 defined within the static housing 112. However, the second coil assembly 130 is housed within a cavity 132 defined within the intermediate element 140.

In the solenoid assembly 110 of Fig. 3, the first and second coil assemblies 120, 130 can be switched on (i.e., current passed therethrough) simultaneously, or the second coil assembly 130 (which provides the second magnetic actuation force M2' to move the plunger 114 switched on) before the first coil assembly 120. This is in order to prevent the second magnetic air gap G2' from becoming larger than it is in the resting or off state of the solenoid assembly 110.

The second actuation limiting surface 146 of the solenoid assembly 110 is disposed on the intermediate element 140, rather than also being on the static housing 112.

As illustrated, the intermediate element 140 is substantially S-shaped or Z-shaped in cross-section viewed in a circumferential direction.

The solenoid assembly 210 illustrated in Fig. 4 differs from each of solenoid assembly 10 of Fig. 2 and solenoid assembly 110 of Fig. 3. The solenoid assembly 210 of Fig. 4 includes only a single coil assembly 220 forming the coil arrangement 221. The single coil assembly 220 is provided in a cavity 232 in the intermediate element 240. The single coil assembly 220 generates a second magnetic actuation force M2" when energised which acts in a similar way to the second magnetic actuation force M2 and M2' of Figs. 2 and 3 to move the plunger 214 proximally with respect to the intermediate element 240 along the longitudinal actuation axis A. The single coil assembly 220 also generates a first magnetic actuation force M1" outside the single coil assembly 220 acting in a distal direction D on the static housing 212. Since the static housing 212 is held static, the first magnetic actuation force M1" results in a complementary force M* that acts on the intermediate element 240 in a proximal direction P on the intermediate element 240 to cause the intermediate element 240 to move in a proximal direction P and thereby reduce or close the first magnetic air gap G1".

The first magnetic actuation force M1" provided by the single coil 220 may be weaker than the second magnetic actuation force M2", dependent on the specific design of the single coil assembly 220, intermediate element 240, static housing 212, and plunger 214. However, the intermediate element 240 and the static housing 212 are made of a ferrous material (for example, a silicon-iron alloy, cobalt-iron alloy, or iron alloy, each of which may be formed in a laminated structure) to direct the magnetic flux in the first magnetic circuit to provide enough strength to move the intermediate element 240 with respect to the static housing 212.

As the coil arrangement 221 of Fig. 4 only includes a single coil assembly 220, the single coil assembly 220 can either be energised or un-energised, so the first and second magnetic actuation forces M1", M2" will be simultaneously activated.

The second actuation limiting surface 246 of the solenoid assembly 210 shown in Fig. 4 is disposed on the intermediate element 240, in a similar manner to the second actuation limiting surface 146 of the solenoid assembly 110 illustrated in Fig. 3.

As will be appreciated, the plunger 214 of Fig. 4 is illustrated as a single integral piece, but it could have a similar configuration to the plungers 14, 114 of Figs. 2 and 3 with a ferromagnetic part 18, 118 attach to a separate remainder of the plunger 14, 114, which may or may not be ferromagnetic. Likewise, the plungers of Figs. 2 and 3 could have a similar configuration to the plunger 214 of Fig. 4.

The intermediate element 240 is also substantially S-shaped or Z-shaped in cross-section viewed in a circumferential direction.

As illustrated in Figs 3 and 4, the actuation surfaces 144, 117, 244, 217 and actuation limiting surfaces 113, 213, 146, 246 are angled at an acute angle θ relative to the radial direction R in the same manner as surfaces 44, 17, 13a, 13b depicted in Fig. 1. The acute angle θ is in the range 30° to 60°, or more narrowly 40° to 50°, or more narrowly still about 45°.

Nonetheless, in other embodiments the surfaces 144, 117, 244, 217, 113, 213, 146, 246 may not be angled, and may extend parallel to the radial direction R.

## Claims

1. A solenoid assembly (10;110;210) comprising:
a static housing (12;120;220);
a plunger (14;114;214) disposed within the housing (12;112;212) and translatable along an actuation axis (A) in response to a magnetic actuation force;
an intermediate element (40;140;240) disposed within the housing (12;112;212) and surrounding at least a portion of the plunger (14;114;214), wherein the intermediate element (40;140;240) is translatable along the actuation axis (A) in response to a magnetic actuation force; and
a coil arrangement (21;121;221) disposed within the housing (12;120;220) configured to provide a first magnetic actuation force (M1' M1'; M1") in response to electrical excitation thereof and to provide a second magnetic actuation force (M2; M2'; M2") in response to electrical excitation thereof;
wherein the coil arrangement (21;121;221) is arranged such that the first magnetic actuation force (M1; M1'; M1") is configured to translate the intermediate element (40;140;240) and the plunger (14;114;214) together with respect to the static housing (12;112;212), and such that the second magnetic actuation force (M2;M2';M2") is configured to translate the plunger (14;114;214) with respect to the intermediate element (40;140;240).

2. The solenoid assembly of claim 1, wherein the coil arrangement (21;121) comprises:
a first coil assembly (20;120) disposed within the housing (12;112) and configured to provide the first magnetic actuation force (M1; M1') in response to electrical excitation thereof; and
a second, different coil assembly (30;130) disposed within the housing (12;112) and configured to provide the second magnetic actuation force (M2; M2') in response to electrical excitation thereof.

3. The solenoid assembly of claim 1 or 2, wherein the intermediate element (40;140;240) includes a first actuation surface (44;144;244) opposing a first actuation limiting surface (13a;113;213) of the housing (12;112;212), and wherein a first gap (G1;G1';G1") between the first actuation surface (44;144;244) and the first actuation limiting surface (13a;113;213) is reduced or closed in response to the first magnetic actuation force (M1;M1';M1") translating the intermediate element (40;140;240).

4. The solenoid assembly of claim 3, wherein the first actuation and actuation limiting surfaces (44,13a;144,113;244,213) are angled at an acute angle (θ) relative to a radial direction (R) from the actuation axis (A), for example, at an angle (θ) of between 30°-60°, such as between 40°-50° or about 45°.

5. The solenoid assembly of claim 2 or claim 3 or 4 when dependent on claim 2, wherein the first and second coil assemblies (20,30) are arranged in series axially along the actuation axis (A).

6. The solenoid assembly of claim 5, including a sliding joint (41) between the intermediate element (40) and the plunger (14).

7. The solenoid assembly of claim 5 or 6, wherein the plunger (14) includes a second actuation surface (17) opposing a second actuation limiting surface (13b) of the housing (12), and wherein a second gap (G2) between the second actuation surface (17) and the second actuation limiting surface (13b) is reduced or closed in response to the second magnetic actuation force (M2) translating the plunger (14).

8. The solenoid assembly of claim 5, 6 or 7, wherein the first and second coil assemblies (20,30) are disposed in respective cavities (22,32) in the housing (12).

9. The solenoid assembly of claim 2 or claim 3 or 4 when dependent on claim 2, wherein the first coil assembly (120) and the second coil assembly (130) are arranged concentrically about the actuation axis (A) with the first coil assembly (120) surrounding the second coil assembly (130).

10. The solenoid assembly of claim 9, wherein the intermediate element (140) is substantially S-shaped or Z-shaped in cross-section.

11. The solenoid assembly of claim 9 or 10, wherein the second coil assembly (130) is disposed in a cavity (132) in the intermediate element (140).

12. The solenoid assembly of claim 9, 10 or 11, wherein the plunger (114) includes a second actuation surface (117) opposing a second actuation limiting surface (146) of the intermediate element (140), and wherein a second gap (G2) between the second actuation surface (117) and the second actuation limiting surface (146) is reduced or closed in response to the second magnetic actuation force (M2) translating the plunger (114).

13. The solenoid assembly of claim 7 or 12, wherein the second actuation and actuation limiting surfaces (17,117;13b,146) are angled at an acute angle (θ) relative to a radial direction (R) from the actuation axis (A), for example, at an acute angle of between 30°-60°, such as 40°-50° or about 45°.

14. An aircraft door (4) comprising:
a door lock (8a,8b); and
the solenoid assembly (10;110) of any preceding claim integrated into the door lock (8a,8b), wherein translation of the plunger (14;114) and is configured to provide selective locking or unlocking of the door lock (8a,8b).

15. A method of operating the solenoid assembly of any of claim 2 or claims 3 to 13 when dependent on claim 2, the method comprising electrically energising the first and second coil assemblies (20,30;120,130) simultaneously or at separate times to each other.
